Europäisches Patentamt

European Patent Office

Office européen des brevets

(19)

(11) EP 0 718 754 A1

(12) **EUROPEAN PATENT APPLICATION**

(43) Date of publication:
26.06.1996 Bulletin 1996/26

(51) Int. Cl.$^6$: **G06F 7/52**

(21) Application number: 94830581.8

(22) Date of filing: 22.12.1994

(84) Designated Contracting States:
DE FR GB IT

(71) Applicant: SGS-THOMSON MICROELECTRONICS
S.r.l.
I-20041 Agrate Brianza (Milano) (IT)

(72) Inventors:
• Raffaele Costa
20100 Milano (IT)
• Faldarini, Anna
23100 Sondrio (IT)
• Formenti, Laura
Cabiate (Como) (IT)

(54) **Multiplier circuit for product operation between numbers, both binary and two's complement numbers**

(57) A multiplier circuit for multiplying together both natural and two's complement binary numbers, which it receives in the form of electric signals, having predetermined logic values, applied to input terminals of logic gating circuits. Such circuits provide partial products of the bits of the two binary factors, and a combinatorial network provides the final sum of such partial products.

Those partial multiplications which comprise at least one of the more significant bits of the operands are performed by logic gating circuits which can be enabled to also carry out a two's complement partial multiplication.

The multiplier circuit further comprises additional logic gating circuits which supply the combinatorial network with additive constants with predetermined logic values unrelated to the factors.

FIG. - 1

## Description

This invention relates to multiplier circuits for accomplishing operations with binary numbers, and in particular, to a monolithically integratable multiplier circuit which can be used to advantage in integrated circuit microprocessors or microcontrollers.

Of special importance to such applications is the processing speed of the device, and accordingly, the invention should be regarded as concerned primarily with product operations wherein the mode of inputting the digital signals that represent the operands and outputting the signals that represent the result is of the parallel rather than serial type.

However, the possibility of it being used in a serial or mixed mode should not be ruled out altogether.

Among the circuits for carrying out arithmetical operations of multiplication, multipliers having a typical iterative structure architecture known as "cellular array" from the literature have been found specially advantageous.

Assuming that two integers expressed in natural binary form with 4 parallel-supplied bits are to be multiplied together,

$$A = a_3 {}^*2^3 + a_2 {}^*2^2 + a_1 {}^*2 + a_0$$

$$B = b_3 {}^*2^3 + b_2 {}^*2^2 + b_1 {}^*2 + b_0$$

then the product is,

$$A^*B = b_0 (a_3 {}^*2^3 + a_2 {}^*2^2 + a_1 {}^*2 + a_0) + 2b_1 (a_3 {}^*2^3 + a_2 {}^*2^2 + a_1 {}^*2 + a_0) +$$

$$4b_2 (a_3 {}^*2^3 + a_2 {}^*2^2 + a_1 {}^*2 + a_0) + 8b_3 (a_3 {}^*2^3 + a_2 {}^*2^2 + a_1 {}^*2 + a_0)$$

Therefore, the product of A by B is obtained by adding together the partial products wherein the terms making up the following matrix appear:

| | | | | $a_3b_0$ | $a_2b_0$ | $a_1b_0$ | $a_0b_0$ |
|---|---|---|---|---|---|---|---|
| | | | $a_3b_1$ | $a_2b_1$ | $a_1b_1$ | $a_0b_1$ | |
| | | $a_3b_2$ | $a_2b_2$ | $a_1b_2$ | $a_0b_2$ | | |
| | $a_3b_3$ | $a_2b_3$ | $a_1b_3$ | $a_0b_3$ | | | |

There are several different types of algorithms whereby the sum of the partial products thus computed can be reckoned. Iterative array multipliers consist of a combinatorial network which performs this addition with a delay which is only dependent on the time required to go through the various logic circuits.

The computation of the matrix of partial products is accomplished using a combinatorial network of logic AND gating circuits whereby all the matrix bits are obtained simultaneously with just the delay of a simple logic product. If the size of the operands is of n bits, then n*n AND gates will be required.

There are several circuit architectures which can provide the sum of the individual logic products making up the partial product matrix. of considerable import is Dadda's algorithm, described in an article entitled "Some Schemes for Parallel Multipliers", Alta Frequenza, Vol. XXXIV, No. 5, May 1965, which yields the sum of the individual partial products by compressing the matrix columns, that is progressively reducing the number of the rows which make up the partial product matrix by adding together the bits in one column until two rows only are obtained whose sum, representing the result of the multiplication, is obtained using a fast adder. Thus, the multiplier is composed of three parts: the matrix structure of AND gates which is to compute the partial products, the circuit for compressing the columns, and the final adder.

For effecting the column compression portion of the procedure, parallel counters may be used, that is components which will count the number of bits equal to 1 present at their inputs; where two inputs only are provided, these would be so-called Half-Adders (briefly, HA), whereas with three inputs provided, these would be so-called Full Adders (briefly, FA). However, they may also be defined for any number of inputs greater than three.

Dadda uses both FAs and HAs in his multiplier, and shows that the best method (i.e., that requiring the smallest number of cells) consists of compressing the columns such that their number decreases in accordance with the following recursive formula:

$$d(0) = 2$$

$$D(k+1) = \lfloor 3/2d(k) \rfloor$$

where, d(i) is the number of rows in the i-th stage, and k is the number of stages required for the reduction.

Thus, the following series is generated:

| k | 0 | 1 | 2 | 3 | 4 | 5 | 6 | 7 | 8 | 9 |
|------|---|---|---|---|---|----|----|----|----|----|
| d(k) | 2 | 3 | 4 | 6 | 9 | 13 | 19 | 28 | 42 | 63 |

For example, in the 8x8 case, the initial number (8) of the rows must be reduced to 6, 4, 3, and ultimately 2; accordingly, 4 stages are required.

The algorithm provides for the use of FAs and HAs arranged in a structure which ensures that no more than d(k) rows exist in the k-th stage.

Also described in the article is Wallace's block diagram, and reflections are offered on the parallel adders used in binary number multipliers.

In another, more recently published article by L. Dadda, entitled "On Parallel Digital Multiplier", Alta Frequenza, Vol. XLV, No. 10, October 1976, the parallel implementation of the adders is dealt with, using "fast" storage elements to provide high-speed digital multipliers.

The technique employed for multiplying natural binary numbers may also be used for relative numbers, expressed in binary form, by representing the negative value numbers in the two's complement binary form.

The necessary add operation is carried out, in fact, by two's complementing the negative terms.

This allows the complexity of the arithmetic circuits of a processor to be greatly reduced and, accordingly, the speed of operation increased.

Known are natural number multipliers, two's complement binary number multipliers, and multipliers which either enable two natural binary numbers or two's complement binary numbers to be multiplied together.

The underlying technical problem of this invention is to provide a multiplier circuit for accomplishing multiplication operations with two binary operands, each whether in the natural or two's complement form, as desired.

This is achieved without prejudice for the high-speed and design simplicity features of conventional multiplier circuits, in particular Dadda's circuits.

This problem is solved by a multiplier circuit as indicated in the introduction and defined in the characterizing portions of the appended claims.

The features and advantages of a multiplier circuit according to the invention will be apparent from the following description of an embodiment thereof, given by way of non-limitative example with reference to the accompanying drawings.

In the drawings:

Figures 1, 2 and 3 show possible circuit arrangements implementing the logic gating circuits which are to provide the partial products of the binary factors with two's complement function; and

Figure 4 shows a block diagram for a vectorial calculus unit incorporating a multiplier circuit according to the invention.

Many of the known multiplier circuits use factor re-coding techniques, such as Booth's algorithm, to provide high-performance capabilities.

Such re-coding techniques allow the multiplication operation to be greatly simplified in that they allow the number of the partial products entering the computation to be reduced preliminarly, thereby reducing the time required for the multiplication, or the physical size of the multiplier circuit.

In accordance with the invention, the multiplier circuit has instead an iterative structure of a standard type, which is matched to the four product types involved by appropriate logic circuits effective to serve functions of partial product complementing and of adding additive constants which are independent of the operands, using the so-called method of the additive constants for computing the product.

As previously stated, both factors may be natural numbers, two's complement numbers, or be one a two's complement and the other a natural number.

It can at all events be shown that all the cases of the possible products for current devices, such as 8x16 bits or 16x16 bits, can be encompassed by one or more multiplications of 8x8 bits belonging to one of the following four types. The factors A and B are designated as follows:

$A = a_7 a_6 a_5 a_4 a_3 a_2 a_1 a_0$ and $B = B_7 b_6 b_5 b_4 b_3 b_2 b_1 b_0$

a) 8x8 multiplication -- where $a_7$ and $b_7$ have positive weight, and therefore, the partial products $a_0 b_0 ... a_7 b_7$ (designated X in the following charts) are added in the natural mode; the matrix of partial products has the following structure:

```
                        XXXXXXXX
                       XXXXXXXX
                      XXXXXXXX
                     XXXXXXXX
                    XXXXXXXX
                   XXXXXXXX
                  XXXXXXXX
                 XXXXXXXX
```

Thus, the product of natural A and natural B will be a natural number.

b) 8x8 multiplication -- where $b_7$ has negative weight. In this case, those partial products which contain bit $b_7$ should be complemented, and a suitable constant should be added to the result of the multiplication (elements to be complemented are underlined):

```
                        XXXXXXXX
                       XXXXXXXX
                      XXXXXXXX
                     XXXXXXXX
                    XXXXXXXX
                   XXXXXXXX
                  XXXXXXXX
                 XXXXXXXX
          100000001
```

Thus, the product of natural A and relative B will be a relative number.

c) 8x8 multiplication -- where $a_7$ has negative and $b_7$ positive weight. Here, it is the partial products which contain $a_7$ that should be complemented. In view of the structure being symmetrical with the case b) above, the additive constant will be the same.

EP 0 718 754 A1

```
            XXXXXXXX
            XXXXXXXX
            XXXXXXXX
            XXXXXXXX
            XXXXXXXX
            XXXXXXXX
            XXXXXXXX
            XXXXXXXX
          100000001
```

The product of relative A and natural B will, threfore, be a relative number.

d) 8x8 multiplication -- where both $a_7$ and $b_7$ have negative weight. The partial products which contain $a_7$ and $b_7$ should be complemented except $a_7b_7$.

The additive constant will be the sum of the constants in the previous two cases b) and c).

```
            XXXXXXXX
            XXXXXXXX
            XXXXXXXX
            XXXXXXXX
            XXXXXXXX
            XXXXXXXX
            XXXXXXXX
            XXXXXXXX
          100000001
```

Thus, the product of relative A and relative B will be a relative number.

The example of the partial product matrix resulting in the instance of 8x8 bits, to which can be reduced as mentioned even the more complex cases of 8x16 bits and 16x16 bits, is in no way limitative.

The same method can be used for cases of mxn bits, where m and n are any selected integers.

Those elements which belong to the main diagonal of the partial product matrix should, therefore, be complemented if a multiplication of the c) or d) type is to be performed, whilst those in the bottom row should be complemented in the instance of a b) or d) operation. The matrix of partial products should, moreover, be added bits representing the additive constant. In the b) and c) cases, the additive constant is given by the following sequence of bits:

1000000100000000

and in the d) case by:

1000001000000000.

In the a) situation, the constant would obviously be nil.

These considerations can be accounted for by introducing three bits, P, Q and S, into the partial product matrix in accordance with a scheme as shown here below:

|  |  |  |  |  |  |  |  |  |  |  |  |  |  |  |
|---|---|---|---|---|---|---|---|---|---|---|---|---|---|---|
|  |  |  |  |  |  |  | $E_8$ | $a_6b_0$ | $a_5b_0$ | $a_4b_0$ | $a_3b_0$ | $a_2b_0$ | $a_1b_0$ | $a_0b_0$ |
|  |  |  |  |  |  | $E_9$ | $a_6b_1$ | $a_5b_1$ | $a_4b_1$ | $a_3b_1$ | $a_2b_1$ | $a_1b_1$ | $a_0b_1$ |  |
|  |  |  |  |  | $E_{10}$ | $a_6b_2$ | $a_5b_2$ | $a_4b_2$ | $a_3b_2$ | $a_2b_2$ | $a_1b_2$ | $a_0b_2$ |  |  |
|  |  |  |  | $E_{11}$ | $a_6b_3$ | $a_5b_3$ | $a_4b_3$ | $a_3b_3$ | $a_2b_3$ | $a_1b_3$ | $a_0b_3$ |  |  |  |
|  |  |  | $E_{12}$ | $a_6b_4$ | $a_5b_4$ | $a_4b_4$ | $a_3b_4$ | $a_2b_4$ | $a_1b_4$ | $a_0b_4$ |  |  |  |  |
|  |  | $E_{13}$ | $a_6b_5$ | $a_5b_5$ | $a_4b_5$ | $a_3b_5$ | $a_2b_5$ | $a_1b_5$ | $a_0b_5$ |  |  |  |  |  |
|  | $E_{14}$ | $a_6b_6$ | $a_5b_6$ | $a_4b_6$ | $a_3b_6$ | $a_2b_6$ | $a_1b_6$ | $a_0b_6$ |  |  |  |  |  |  |
| $E_7$ | $E_6$ | $E_5$ | $E_4$ | $E_3$ | $E_2$ | $E_1$ | $E_0$ |  |  |  |  |  |  |  |
| P |  |  |  |  |  | Q | S |  |  |  |  |  |  |  |

which represents the partial product matrix in its most general form, again for the preferred example with 8-bit numbers.

Shown more detailedly in the two charts that follow is the value taken by the functions $E_0$, $E_1$, $E_2$,...,$E_{14}$, P, Q and S in each of the four cases, identified here by two bits X and Y.

|  | X | Y | E0 | E1 | E2 | E3 | E4 | E5 | E6 | E7 |
|---|---|---|---|---|---|---|---|---|---|---|
| a | 0 | 0 | $a_0b_7$ | $a_1b_7$ | $a_2b_7$ | $a_3b_7$ | $a_4b_7$ | $a_5b_7$ | $a_6b_7$ | $a_7b_7$ |
| b | 0 | 1 | $\overline{a_0b_7}$ | $\overline{a_1b_7}$ | $\overline{a_2b_7}$ | $\overline{a_3b_7}$ | $\overline{a_4b_7}$ | $\overline{a_5b_7}$ | $\overline{a_6b_7}$ | $\overline{a_7b_7}$ |
| c | 1 | 0 | $a_0b_7$ | $a_1b_7$ | $a_2b_7$ | $a_3b_7$ | $a_4b_7$ | $a_5b_7$ | $a_6b_7$ | $\overline{a_7b_7}$ |
| d | 1 | 1 | $\overline{a_0b_7}$ | $\overline{a_1b_7}$ | $\overline{a_2b_7}$ | $\overline{a_3b_7}$ | $\overline{a_4b_7}$ | $\overline{a_5b_7}$ | $\overline{a_6b_7}$ | $a_7b_7$ |

|  | X | Y | E8 | E9 | E10 | E11 | E12 | E13 | E14 |
|---|---|---|---|---|---|---|---|---|---|
| a | 0 | 0 | $a_7b_0$ | $a_7b_1$ | $a_7b_2$ | $a_7b_3$ | $a_7b_4$ | $a_7b_5$ | $a_7b_6$ |
| b | 0 | 1 | $a_7b_0$ | $a_7b_1$ | $a_7b_2$ | $a_7b_3$ | $a_7b_4$ | $a_7b_5$ | $a_7b_6$ |
| c | 1 | 0 | $\overline{a_7b_0}$ | $\overline{a_7b_1}$ | $\overline{a_7b_2}$ | $\overline{a_7b_3}$ | $\overline{a_7b_4}$ | $\overline{a_7b_5}$ | $\overline{a_7b_6}$ |
| d | 1 | 1 | $\overline{a_7b_0}$ | $\overline{a_7b_1}$ | $\overline{a_7b_2}$ | $\overline{a_7b_3}$ | $\overline{a_7b_4}$ | $\overline{a_7b_5}$ | $\overline{a_7b_6}$ |

These charts represent the truth table for the two's complement functions added to the partial product matrix, while the additive constant can be calculated as follows:

$$P = X + Y \qquad Q = X \times Y \qquad S = X \oplus Y$$

where the logic operations specified are of the OR, AND and EXOR types, respectively.

On applying such rules to the multiplier developed by Dadda, it can be seen that the changes made do not affect the delay in computation time. As regards the silicon area occupied, the increase is a modest one. In fact, both the number of the stages (four stages in cascade) and the total number of the adders (37 FAs plus 5 HAs instead of 35 FAs plus 7 HAs) may be left unchanged if the circuit is designed using a similar method to Dadda's.

It should be noted, however, that for the same partial product matrix and functions and additive constants as specified above, in designing a multiplier circuit according to this invention, the column compression portion can be implemented in any of several different ways.

For example, the integration area efficiency can be improved by a distribution of FAs and HAs which is as equable as possible among the various stages and a reduction in the number of interconnects.

In a similar way to conventional multiplier circuits, the multiplier circuit of this invention also comprises a structure with logic gating circuits for receiving, in the form of electric signals having predetermined logic values, the two binary numbers which are to be multiplied together and for obtaining the partial products shown in the general matrix layout.

In the most general of cases, this structure comprises m groups of n logic gating circuits, where m and n are the bits of the two binary numbers to be multiplied, which would usually have the same number of bits ($m = n$).

Such logic gating circuits have first and second input terminals for the electric signals and an output terminal which is connected to a combinatorial network for the final summing of the partial products.

Applied to the first input terminal of all the logic gating circuits in one group is one of the m electric signals which encode one of the two binary numbers.

The second input terminal of each logic gating circuit in one group is instead applied one of the n electric signals which encode the other binary number, which signal would be a different one for each logic gating circuit in one group.

A characterizing features of a multiplier circuit according to this invention is that those logic gating circuits which are applied corresponding electric signals to the more significant bits of the two binary numbers (at both, or at least one of, said first and second input terminals) and carry out the operations with two's complement function, as indicated in the matrix layout by the character E, also have third and fourth input terminals.

These terminals are applied, for all the logic gating circuits mentioned above, similar electric control signals having predetermined values, whereby each of said logic gating circuits can be enabled to also carry out a two's complement operation on the product of the signals applied to the first and second input terminals.

A multiplier circuit according to the invention further comprises first, second and third additional logic gating circuits, each having first and second input terminals and an output terminal.

Such additional circuits supply the combinatorial network with signals having a predetermined logic value, unrelated to the binary factors, for addition to the output signals from the other logic gating circuits.

The input terminals of the additional circuits are applied the same signals as are applied to the third and fourth terminals of the logic gating circuits for the partial products with two's complement function.

The predetermined logic values of the control signals correspond to the bits X and Y in the above charts, and therefore, are associated with cases a), b), c) and d) of multiplication type.

The logic gating circuits with two input terminals may be provided as standard logic AND circuits.

More complicated are instead the viable implementations of both the logic gating circuits with four input terminals and the additional ones.

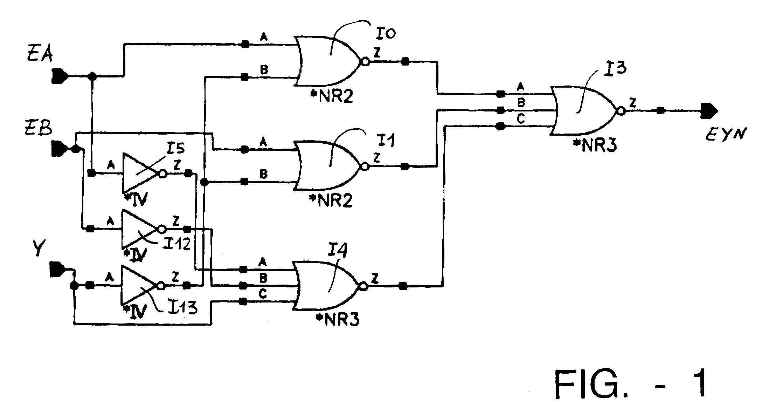

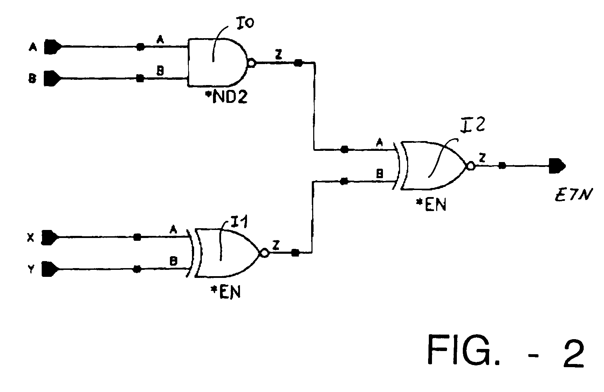

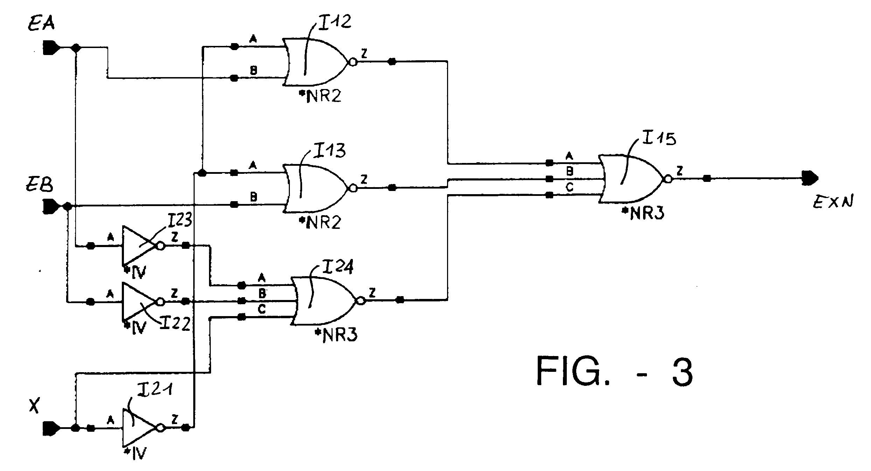

Figure 1 shows a possible implementation of those logic gating circuits which provide the partial products with two's complement function, $E_0$, $E_1$, $E_2$, $E_3$, $E_4$, $E_5$ and $E_6$; Figure 2 shows a possible implementation of that logic gating circuit which provides $E_7$; and Figure 3 shows a possible implementation of those logic gating circuits which provide $E_8$, $E_9$, $E_{10}$, $E_{11}$, $E_{12}$, $E_{13}$ and $E_{14}$.

The additional logic gating circuits are, as mentioned above, ordinary logic circuits of the AND, OR and EXOR types.

The corresponding electric signals to the bits X and Y are generated by circuit means in the system which comprises the multiplier circuit based upon a determination of either the natural or two's complement form of the binary operands.

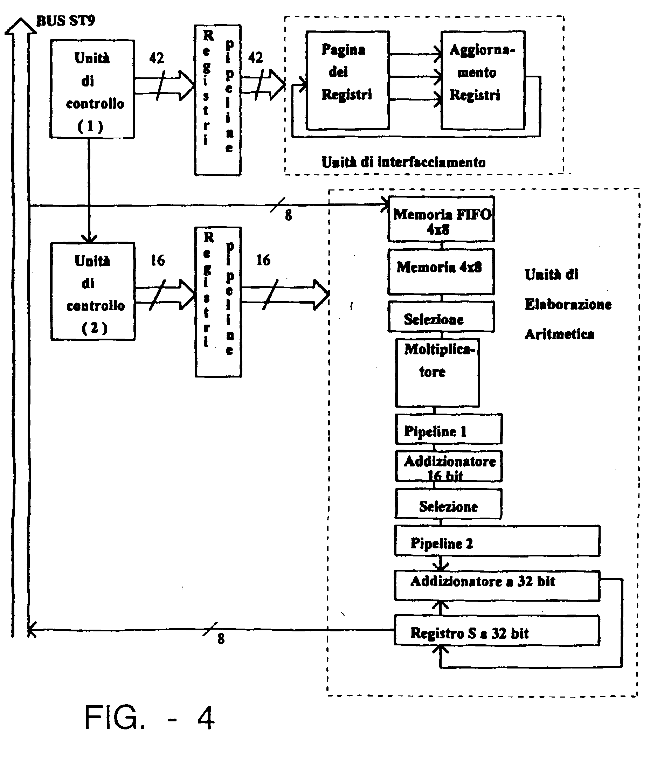

Shown in Figure 4 is a block diagram for a possible application of a fast multiplier circuit according to the invention which can operate on either forms of binary numbers.

This is a dedicated arithmetic macro-cell (VCU) for calculating the scalar product (or internal product) of the two integer vectors, adapted to be integrated to a microcontroller using a technology of the VLSI type.

It will be appreciated that the embodiment described hereinabove in an illustrative and non-limitative sense may the subject of modifications, supplements and substitutions of elements without departing from the protection scope of the following claims.

## Claims

1. A multiplier circuit for receiving, in the form of n electric signals having each predetermined logic value, a first number, and in the form of m electric signals having each predetermined logic value, a second number, wherein n and m are integer numbers with any desired values, and providing, in the form of electric signals having each predetermined logic value, a product of such numbers, comprising m groups of logic gating circuits, each having at least first and second input terminals and an output terminal and being effective to carry out a logic multiplication of input electric signals each having predetermined logic value, one of the m signals related to the second number being applied to the first input terminal of all the logic gating circuits in one group, said signal being a different one for each group, and one of the n signals related to the first number being applied to the second input terminal of each of the logic gating circuits in one group, said signal being a different one for each logic gating circuit in one group, and comprising a combinatorial network coupled to the output terminals of said logic gating circuits and effective to carry out an addition of the output signals from such logic gating circuits, characterized in that all the logic gating circuits of one of the n groups and at least one logic gating circuit in each one of the other (n-1) groups also have at least third and fourth input terminals for which electric command signals having predetermined logic values are applied, whereby each of said logic gating circuits can be enabled to also carry out a second type of multiplication operation of the signals applied to the first and second input terminals, and further characterized in that it comprises first (P), second (Q) and third (S) additional logic gating circuits having at least first and second input terminals and an output terminal and being effective to supply the combinatorial network with output signals having each predetermined constant logic value for addition to the output signals from the other logic gating circuits.

2.  A multiplier circuit according to Claim 1, characterized in that the logic gating circuits having third and fourth input terminals are those logic gating circuits which have a more significant one of the signals related to the two numbers applied to at least one of the first and second input terminals thereof.

3.  A multiplier circuit according to Claim 2, characterized in that the third and fourth terminals of all the logic gating circuits having third and fourth terminals, and the same signals having predetermined logic values are applied to the first and second terminals of the additional logic gating circuits.

4.  A multiplier circuit according to any of Claims 1, 2 and 3, characterized in that the logic gating circuits with two input terminals only are of AND type, and the three additional logic gating circuits are of OR, AND and exclusive OR types, respectively, and that the predetermined logic values of the electric signals are of a first and a second type.

5.  A multiplier circuit according to any of Claims 1, 2, 3 and 4 for receiving first and second binary numbers, characterized in that the logic gating circuits having third and fourth terminals can be enabled to carry out a two's complement logic multiplication operation of the signals applied to the first and second input terminals.

6.  A multiplier circuit according to Claim 5, characterized in that the logic gating circuit with third and fourth input terminals which has the more significant signals of the two binary numbers applied to the first and second input terminals thereof is enabled to carry out a two's complement logic multiplication operation when the predetermined logic values of the electric signals applied to the third and fourth input terminals are the one of the first type and the other of the second type, in that the other logic gating circuits, having third and fourth input terminals and the more significant signal of the first binary number applied to one of the first and second input terminals thereof, are enabled to carry out a two's complement logic multiplication operation when an electric signal having a logic value of the first type (1) is applied to their third input terminal and an electric signal of the second type (0) is applied to their fourth input terminal, and in that the other logic gating circuits, having third and fourth input terminals and the more significant signal of the second binary number applied to one of the first and second input terminals thereof, are enabled to carry out a two's complement logic multiplication operation when an electric signal of the first type (1) is applied to their fourth input terminal.

7.  A monolithically integrated microprocessor device, characterized in that it comprises at least one multiplier circuit as claimed in any of Claims 1, 2, 3, 4, 5 and 6.

8.  A monolithically integrated microcontroller device, characterized in that it comprises at least one multiplier circuit as claimed in any of Claims 1, 2, 3, 4, 5 and 6.

9.  A device with an electrically erasable integrated memory, characterized in that it comprises at least one multiplier circuit as claimed in any of Claims 1, 2, 3, 4, 5 and 6.

10. A microcontroller device according to Claim 8, characterized in that the multiplier circuit performs a computation of the scalar multiplication of two integer vectors.

FIG. - 1

EP 0 718 754 A1

FIG. - 2

FIG. - 3

EP 0 718 754 A1

BUS ST9

| Unità di controllo (1) | →42→ | Registri pipeline | →42→ |

Unità di interfacciamento

| Pagina dei Registri | | Aggiorna-mento Registri |

| Unità di controllo (2) | →16→ | Registri pipeline | →16→ |

8

Memoria FIFO 4x8

Memoria 4x8

Unità di Elaborazione Aritmetica

Selezione

Moltiplica-tore

Pipeline 1

Addizionatore 16 bit

Selezione

Pipeline 2

Addizionatore a 32 bit

Registro S a 32 bit

8

## FIG. - 4

**European Patent Office**

## EUROPEAN SEARCH REPORT

Application Number

EP 94 83 0581

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO-A-91 19249 (MICRON TECHNOLOGY)<br>* page 8, line 15 - page 12, line 10 *<br>--- | 1-10 | G06F7/52 |
| A | 11TH SYMPOSIUM ON COMPUTER ARITHMETIC,<br>29 June 1993 - 2 July 1993 WINDSOR, ONTARIO,<br>pages 54-61, XP 000419922<br>MONTUSCHI 'n x n Carry-Save Multipliers without Final Addition'<br>* page 55, column 2, line 1 - line 4 *<br>* page 56, column 1, line 25 - line 30 *<br>--- | 1 | |
| A | US-A-4 153 938 (GHEST ET AL)<br>* abstract *<br>----- | 1 | |

TECHNICAL FIELDS
SEARCHED     (Int.Cl.6)

G06F

The present search report has been drawn up for all claims

| Place of search | Date of completion of the search | Examiner |
|---|---|---|
| THE HAGUE | 2 May 1995 | Cohen, B |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document